# EUROPÄISCHE PATENTANMELDUNG

(11) **EP 2 392 745 A2**
(43) Veröffentlichungstag der Anmeldung: **07.12.2011**
(21) Anmeldenummer: 11004484.9
(22) Anmeldetag: 01.06.2011
(51) Int. Cl.: E04D 3/30

(54) **Solarpaneel für Leichtbauhallen**

(30) Priorität: 04.06.2010 DE 202010007578 U; 30.09.2010 DE 102010047015
(71) Anmelder: Duscher, Andreas, 80992 München (DE)
(72) Erfinder: Duscher, Andreas, 80992 München (DE)
(74) Vertreter: Beckord, Klaus

(57) **Zusammenfassung**

Ein Solarpaneel eines Hallendach- oder -fassadensystems mit einem Profilblech (10) mit einem tragfähigkeitssteigernden Querschnitt, mit einer Befestigungsebene (E), in der das Profilblech (10) befestigbar ist, und mit einem am Profilblech (10) befestigten flächigen streifenförmigen und flexiblen Photovoltaikelement (40), wird dadurch weitergebildet, dass das Photovoltaikelement (40) auf einem unebenen Teilprofil des Profilblechs (10) angeordnet ist.

## Beschreibung

Die Erfindung betrifft ein Solarpaneel eines Hallenfassaden- oder -dachsystems mit einem Profilblech aus Metall oder einem anderen geeigneten Material, und mit einer Befestigungsebene, in der das Profilblech befestigbar ist. Profilbleche sind Flächentragwerke, die werkseitig längs einer Erstreckungsrichtung zum Beispiel durch Prägen oder Walzen verformt werden und damit einen Querschnitt erhalten, der die Tragfähigkeit des Profilblechs steigert. Als Befestigungsebene des Profilblechs ist diejenige Konstruktionsebene bezeichnet, in der das Profilblech auf einer Tragkonstruktion eines Gebäudes, beispielsweise an einem Dachstuhl eines Hallendachs oder an Stützen oder Pfeilern einer Hallenwand, unmittelbar oder mittelbar befestigt ist.

Als Profilbleche kommen häufig Trapezbleche zum Einsatz. Der Begriff "Trapezblech" ist dabei nicht im streng geometrischen Sinne zu verstehen, sondern als Sammelbegriff für lang gestreckte gekantete Profilbleche zur Gebäudeverkleidung mit sowohl trapezförmigem als auch beispielsweise rechteckigem oder quadratischem Teilquerschnitt. Das Trapezblech gliedert sich in seinem Querschnitt (quer zu seiner Längserstreckung) betrachtet in Teilprofile, die eine stark unterschiedliche Breite des Querschnitts des Trapezblechs einnehmen können und in Längsrichtung des Trapezblechs weitgehend unverändert und parallel zueinander verlaufen. Wenigstens ein Teilprofil kann ein Steg sein, wenigstens ein weiteres Teilprofil eine Sicke. Der Steg ist dasjenige Teilprofil des Trapezblechs, das von der Befestigungsebene deutlich absteht. Es bildet eine Ansichtebene des Trapezblechs, die sich zu seiner Befestigungsebene weitgehend parallel erstreckt. Die Teilprofile mehrerer nebeneinander montierter Trapezbleche bilden eine Ansichtsebene oder -fläche der Hallenfassade oder des Hallendachs. Die Sicke ist eine Abkantung des Trapezblechs, die jedenfalls der Stabilität bzw. der Versteifung des Trapezblechs dient und darüber hinaus einen Anschluss zu einem benachbarten Trapezblech bilden kann.

Für Hallenfassaden- oder -dachsysteme werden alternativ Wellbleche verwendet. Sie stellen ebenfalls lang gestreckte, aber selten gekantete Profilbleche dar, die prinzipiell genauso wie Trapezbleche hergestellt werden. Sie weisen meist einen regelmäßigen wellenförmig gestalteten Querschnitt auf. Ihre Teilprofile bestehen im Allgemeinen aus Oberund Unterwellen gleicher Breite und mit gleichem Radius. Als Oberwelle wird die der Befestigungsebene entfernter, als Unterwelle die der Befestigungsebene näher liegende Welle bzw. Halbwelle bezeichnet

Das Solarpaneel umfasst außerdem ein flächiges, streifenförmiges und flexibles Photovoltaikelement, das auf dem ggf. breiteren Teilprofil und jedenfalls auf einer der Befestigungsebene abgewandten Seite des Profilblechs befestigt ist, die im Einbauzustand eine Außenseite der Gebäudehülle bzw. die Ansichtsebene darstellt.

Aus der DE 20 2009 013344 U1 ist eine Gebäudeabdeckplatte mit jeweils wenigstens einer Hochsicke und einer Tiefsicke bekannt, die aus einem ersten Material bestehen, wobei ein Photovoltaik-Flächenelement aus einem zweiten Material mit dem aus dem ersten Material bestehenden Anteil der Platte verbunden ist. Die Hochsicken sorgen für die erforderliche Eigensteifigkeit des Trapezblechs. Das erste Material bildet regelmäßig Metall. Die Photovoltaikelemente bestehen üblicherweise aus einem Laminat, also einer gläsernen Schutz- und insbesondere Stützschicht, die über einer Wirkschicht vorgesehen ist, wobei innerhalb der Wirkschicht die photovoltaische Energieumwandlung erfolgt. Die gläserne Schutz- und Stützschicht dient als Stabilisierungsschicht, die dem Laminat die gewünscht mechanische Stabilität verleiht. Das Photovoltaikelement wird also nicht mit einer Tragkonstruktion verbunden, die sich in einem Gebäude befindet, sondern wird werkseitig mit einer an sich bekannten Gebäudedeckplatte versehen. Damit können werkseitig vorgefertigte Gebäudedeckplatten verwendet werden, die bereits mit Photovoltaikelementen versehen sind. Die Montage der Photovoltaikelemente auf der Gebäudedeckplatte muss also nicht bauseits erfolgen, sondern kann werkseitig und damit unabhängig von den Witterungsverhältnissen auf der Baustelle erfolgen. Die damit erzielbaren optimalen Montageverhältnisse führen zu einer dichten Montage der Photovoltaikelemente auf der Gebäudedeckplatte. Als Gebäudedeckplatte werden üblicherweise Trapezbleche mit Hoch- und Tiefsicken verwendet. Die Photovoltaikelemente können entweder auf den breiteren Tiefsicken montiert sein, wo sie eine große Teilfläche der Trapezbleche einnehmen können. Alternativ können die Photovoltaikelemente dicht auf den Hochsicken befestigt werden, so dass sich zwischen ihnen und den somit überspannten Tiefsicken ein Strömungskanal, beispielsweise für Flüssigkeiten ausbilden kann, um Brauchwasser zu erwärmen und gleichzeitig die Photovoltaikelemente von ihrer Rückseite aus zu kühlen.

Aufgabe der vorliegenden Erfindung ist es, eine hinsichtlich der Montage von Photovoltaikelementen auf Profilblechen verbesserte Konstruktion von Solarpaneelen anzugeben. Diese Aufgabe wird erfindungsgemäß bei dem eingangs genannten Solarpaneel dadurch gelöst, dass das Photovoltaikelement auf einem unebenen Teilprofil des Profilblechs angeordnet ist. Das Teilprofil kann insbesondere in Querrichtung zur Längserstreckung einseitig an einer Schmalseite abgeschrägt bzw. abgekantet oder um eine in Längsrichtung des Profilblechs verlaufende Achse gewölbt sein. Als flexibles Photovoltaikelement lassen sich so genannte Dünnschichtmodule verwenden, die für jede Ausrichtung des montierten Elements bzw. der zukünftigen Gebäudehülle geeignet ist. Sie sind so biegsam und flexibel, dass sie in eine Krümmung mit einem Biegeradius von 50 - 80 mm gebracht werden können. Die Erfindung wendet sich also davon ab, eigenstabile Photovoltaikelemente zu verwenden. Sie macht sich vielmehr die Erkenntnis zu nutze, dass sich flexible Photovoltaikelemente aufgrund ihrer Flexibilität insbesondere durch Verklebung leichter montieren lassen. Denn sie erfordern keine absolut ebene Montagefläche auf dem Profilblech, Ausgleichsmaßnahmen bei Unebenheiten können entfallen. Darüber hinaus lassen sich flexible Photovoltaikelemente in gewissen Grenzen auch an vom Standard abweichende Formen von Profilblechen anpassen. Sie können ggf. gerundet oder geknickt sein, ohne dass die Verklebung des flexiblen Photovoltaikelements auf dem Profilblech ausgeschlossen wäre. So lassen sich Profilbleche für eine weite Bandbreite von Einsatzfällen bequem und kostengünstig mit Photovoltaikelementen werkseitig vorfertigen und bauseitig weitgehend wie herkömmliche Profilbleche verarbeiten. Ihr Einsatz erspart damit einen erheblichen Aufwand für die separate Montage von Photovoltaikelementen.

Darüber hinaus bieten flexible Photovoltaikelemente den erheblichen Vorteil, dass ihre Montage nicht zwingend werkseitig, sondern problemlos auch auf der Baustelle erfolgen kann. Damit bieten sie sich für Nachrüstungen bestehender Hallendach- bzw. - fassadensysteme an. Ihre Montage verursacht dort einen wesentlich geringeren Aufwand, weil sie bei weitem nicht so empfindlich sind wie steife oder gar gläserne Elemente. Ihre Verklebung kann je nach Erfordernis teilflächig, nämlich punktuell oder streifenförmig, oder vollflächig erfolgen. Verkleben als Befestigungsart für die Photovoltaikelemente auf dem Profilblech stellt schließlich eine bekannte und gut beherrschbare Montagemöglichkeit dar.

Nach einer vorteilhaften Ausgestaltung der Erfindung umfasst das Solarpaneel ein Trapezblech als Profilblech. Es setzt sich aus sich abwechselnden Teilprofilen zusammen, nämlich einem in Längsrichtung des Trapezblechs verlaufenden Steg und einer in Längsrichtung des Trapezblechs und parallel zum Steg verlaufenden Sicke. Es kann weitgehend regelmäßig aufgebaut sein oder sich in Teilprofile gliedern, die eine im Querschnitt stark unterschiedliche Breite des Trapezblechs einnehmen. Günstigerweise ist das Photovoltaikelement auf dem breiteren Teilprofil befestigt, sofern vorhanden, weil es dort eine größere Fläche des Profilblechs einnehmen kann. Bei Trapezblechen mit regelmäßigem Querschnitt kann das Photovoltaikelement entweder auf dem Steg oder auf der Sicke oder auch auf beiden Teilprofilen befestigt sein.

Gewöhnliche Trapezbleche weisen häufig Hochsicken auf, die sich aus der Befestigungsebene erheben und für die Stabilität des Trapezblechs sorgen. Nach einer vorteilhaften Ausgestaltungsform der Erfindung umfasst das Trapezblech einen mittigen erhabenen Steg und zwei seitlich an seinen Langseiten verlaufende zurückspringende Sicken mit einem Breitenverhältnis der Sicken zum Steg von etwa 1 : 5 bis etwa 1 : 20, wobei das Photovoltaikelement den Steg so gut wie vollflächig bedeckt. Der Steg bildet eine großflächige Ansichts-, Befestigungs- und Bestrahlungsfläche für das Photovoltaikelement. Er erhebt sich aus der bzw. über die Befestigungsebene, steht also von der Tragkonstruktion in der Befestigungsebene nach außen ab. Er nimmt die wesentliche Fläche des Trapezblechs ein, stellt damit die wesentliche Ansichtsfläche der späteren Gebäudehülle dar und bildet die Ansichtebene. Die Sicken dagegen nehmen nur einen geringen Teil des Querschnitts des Trapezblechs ein. Sie sorgen für die Stabilität des Trapezblechs und bilden in der Befestigungsebene die Befestigungsflächen an Pfetten oder Sparren und Stützen oder Pfeilern der Tragkonstruktion des Gebäudes. Sie bilden optische Schattenfugen, die die Ansichtsfläche aus Stegen benachbarter Trapezbleche unterbrechen und gliedern. Durch die Anordnung von großflächigen Stegen und geringflächigen Sicken bieten sich optimale großflächige Befestigungsflächen für die Photovoltaikelemente, weil sie insbesondere von der Befestigungsebene vorstehen und damit vor allem nicht durch benachbarte Sicken oder andere Konstruktionselemente verschattet werden. Dadurch erhalten die Photovoltaikelemente, die auf den Stegen befestigt sind, eine uneingeschränkte Bestrahlungsmöglichkeit und damit Wirksamkeit bzw. Stromausbeute.

Nach einer weiteren vorteilhaften Ausgestaltungsform umfasst das Photovoltaikelement eine streifenförmige, flächige und flexible Trägerbahn, eine ebenso streifenförmige, flächige und flexible photovoltaische Wirkungsschicht und einen elektrischen Anschlussabschnitt an der Wirkungsschicht, wobei der Anschlussabschnitt verdeckt bzw. von der Ansichtsseite des Trapezblechs nicht sichtbar angeordnet ist. Das Photovoltaikelement besitzt also einen geschichteten Aufbau, wonach die Trägerbahn dem Trapezblech zugewandt ist und die photovoltaische Wirkungsschicht auf der anderen Seite der Trägerbahn eine Ansichtsfläche darstellt. Um die in der photovoltaischen Wirkungsschicht erzeugte Energie abzuführen, verfügt das Photovoltaikelement über einen Anschlussabschnitt, u. a. mit Kabeln und ggf. einem Steckeranschluss. Die Kabel und der Stecker sind regelmäßig bzw. jedenfalls mit vertretbarem Aufwand nicht so dünn ausführbar wie die photovoltaische Wirkungsschicht. Da sie an der photovoltaischen Wirkungsschicht anschließen, befinden sie sich zunächst in der gleichen Ebene wie sie auf der Trägerbahn. Damit liegen sie auf der Außenseite und damit in der Ansichtsfläche des Photovoltaikelements. Daher können sie erfindungsgemäß verdeckt angeordnet werden, um einerseits gegen Witterung geschützt zu sein und andererseits die einheitliche flächige Optik des Photovoltaikelements bzw. der Gebäudehülle aus Trapezblechen nicht zu beeinträchtigen.

Mehrere Trapezbleche schließen an ihren Langseiten regelmäßig aneinander an, indem sie sich in schmalen streifenartigen Bereichen überlappen. Nach einer weiteren vorteilhaften Ausgestaltung der Erfindung kann das Trapezblech auch an seiner Schmalseite und damit in Längsrichtung mit einem weiteren Trapezblech einander schuppenartig überlappend montierbar sein. Damit ergibt sich eine weitgehend fugenarme Ansicht, die den geschlossenen und flächigen Charakter der Trapezbleche unterstützt. Zugleich kann im Überlappungsbereich der Anschlussabschnitt des Photovoltaikelements abgedeckt werden.

Nach einer vorteilhaften Ausgestaltung der Erfindung kann das Trapezblech bei einer Anordnung der Wirkungsschicht und des Anschlussabschnitts auf derselben Seite der Trägerbahn an einer Schmalseite eine einseitige Abschrägung des Stegs in Längsrichtung des Trapezblechs von mindestens der Länge des Anschlussabschnitts aufweisen. Liegen also die photovoltaische Wirkungsschicht und der Anschlussabschnitt auf derselben Seite der Trägerbahn und erhebt sich der Anschlussabschnitt deutlich über die photovoltaische Wirkungsschicht hinaus, so lässt sich das einseitig abgeschrägte Trapezblech dennoch von einem benachbarten Trapezblech an seiner Schmalseite überdecken, indem der Anschlussabschnitt auf der Abschrägung angebracht wird. Die Abschrägung verläuft von der Ansichtebene in Richtung der Befestigungsebene und bietet eine Montagefläche zwischen beiden Ebenen, auf der der Anschlussabschnitt befestigt werden kann. Auf der Abschrägung steht er nicht mehr in die Ansichtsebene hinein und kann so eine Überlappung oder einen Stoß zweier benachbarter Trapezbleche an ihren Schmalseiten nicht behindern. Die Trapezbleche können daraufhin in weitgehend derselben Ebene angebracht werden, weil die Abschrägung des einen Trapezblechs samt dem Anschlussabschnitt unter das andere Trapezblech zwischen dessen Steg und dessen Befestigungsebene hineinragt. Diese Ausgestaltungsform macht sich die Flexibilität des Photovoltaikelements zu nutze, das sich problemlos über den Knick zwischen dem Steg des Trapezblechs und seiner Abschrägung hinweg montieren lässt.

Nach einer dazu alternativen Ausgestaltungsform der Erfindung können die Wirkungsschicht und der Anschlussabschnitt des Photovoltaikelements auf gegenüberliegenden Seiten seiner Trägerbahn angeordnet sein und der Steg eine Aussparung mit mindestens den Abmessungen des Anschlussabschnitts des Photovoltaikelements aufweisen. In dieser Ausführungsform ragt also der Anschlussabschnitt des ebenen Photovoltaikelements in Richtung der Befestigungsebene von der Trägerbahn weg. Um eine ebene Montage auf dem Trapezblech zu ermöglichen, wird dem Anschlussabschnitt ein entsprechender Raum zum Durchdringen des Stegs in der Form eines Durchbruchs des Stegs geboten. Der Durchbruch erhält mindestens die Abmessungen des Anschlussabschnitts. Ein gewisses Übermaß des Durchbruchs verhindert, dass der Anschlussabschnitt bei der Montage des Photovoltaikelements auf dem Trapezblech einen Zwangspunkt darstellt. Der Durchbruch lässt sich besonders einfach an einem Rand des Trapezblechs ausbilden, an dem keine Abkantungen, wie beispielsweise die Sicken, angebracht sind. Am einfachsten lässt sich daher ein Durchbruch als U-förmiger Ausschnitt an einer Schmalseite des Trapezblechs ausbilden.

Wie eingangs erwähnt, kann ein erfindungsgemäß geeignetes Profilblech eine Vielzahl von Geometrien aufweisen. Nach einer weiteren vorteilhaften Ausgestaltung kann der Steg eine gewölbte Oberfläche aufweisen, die mit einem Radius um eine in Längsrichtung des Profilblechs verlaufende Achse gekrümmt ist. Das Profilblech kann sich folglich aus gekanteten Teilprofilen und gewellten Teilprofilen zusammensetzen. Den geometrisch ggf. unterschiedlichen Teilprofilen gemeinsam ist der Zweck, dem Profilblech eine höhere Stabilität und Tragfähigkeit zu verleihen. Erfindungsgemäß kann das Photovoltaikelement auch auf einem gewölbten Steg aufgebracht werden, weil es sich dank seiner Flexibilität an dessen gekrümmte Oberfläche anpassen und dort verkleben lässt.

Damit lässt sich das Photovoltaikelement insbesondere auch auf Wellblechen aufbringen, deren Einsatz für Hallenfassaden- und -dachsysteme bekannt und verbreitet ist. Mangels Falzkanten mit geringen Radien können die Photovoltaikelemente dort nahezu beliebig im Bereich der Oberwelle und/oder der Unterwelle oder auf beiden aufgeklebt werden. Ihre Montage auf Wellblech bietet folglich eine hohe Flexibilität bezüglich ihrer dortigen Positionierung. Damit kann der Montageort der Photovoltaikelemente auf dem Wellblech zum Beispiel an eine hauptsächliche Bestrahlungsrichtung einer Fassade durch die Sonne oder an gestalterische Erfordernisse angepasst werden.

Das Prinzip der Erfindung wird nachfolgend anhand einer Zeichnung beispielshalber noch näher erläutert. In der Zeichnung zeigen:
- Figur 1:: Eine Schnittansicht durch ein erfindungsgemäßes Trapezblech,
- Figur 2:: eine Teil-Seitenansicht des Trapezblechs,
- Figur 3:: eine perspektivische Teilansicht des Trapezblechs,
- Figur 4:: eine Schnittansicht einer weiteren Ausgestaltungsform des Trapezblechs,
- Figur 5:: eine zugehörige Teil-Seitenansicht, und
- Figur 6:: eine Detailansicht aus Figur 1.

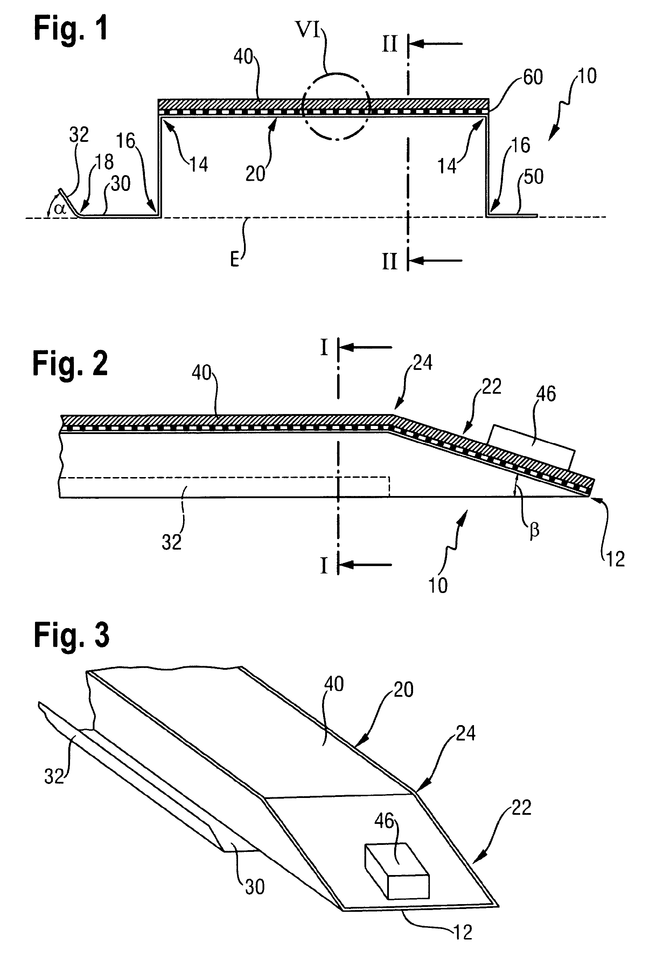

Ein erfindungsgemäßes Trapezblech 10 gemäß Figur 1 setzt sich aus Teilprofilen, nämlich einem Steg 20, einer linken Sicke 30 und einer rechten Sicke 50 zusammen. Der Steg 20 nimmt mit einer Breite von 405 mm den Hauptteil des Querschnitts des Trapezblechs 10 ein. Er erstreckt sich parallel zu einer Befestigungsebene E, von der er ca. 25 mm beabstandet ist. Diesen Abstand erzeugen die rechts- bzw. linksseitigen Sicken 30, 50, die durch zwei rechtwinklige und gegensinnige Falze 14, 16 im Trapezblech 10 gebildet werden. Die linksseitige Sicke 30 ist 25 mm breit und läuft nach einer weiteren Falzung 18 in einem Wasserfalz 32 mit einer Breite von 10 mm aus. Die Falz 18 verläuft schrägwinklig in einem Winkel α von ca. 30° bis 60° gegenüber der Befestigungsebene E.

Das Trapezblech 10 besteht aus Aluminium und erhält seine charakteristische Form durch mehrfaches Kanten unter Ausbildung der Falze 14, 16, 18. Sie bzw. die dadurch entstehenden Sicken 30, 50 sorgen für eine Eigenstabilität des Trapezblechs 10 in Längsrichtung, in der es sich über ca. 5 m erstrecken kann, ohne ungewollt abzuknicken. Ein Trapezblech als Einfeldträger aus Aluminium mit einer Blechdicke von 1 mm kann so bei einer Breite von 200 mm und einem Stützabstand in der Befestigungsebene E von 1000 mm eine Belastung von etwa 2,00 kN/m² übernehmen. Ein Trapezblech gleicher Dimension und Konstruktion aus Stahl erreicht sogar Werte von bis zu 4,76 kN/m².

Das Trapezblech 10 lässt sich in der Befestigungsebene E, also an den Sicken 30, 50, beispielsweise an nicht dargestellten Stützen einer Tragkonstruktion einer Leichtbauhalle befestigen. Es spannt sich dann waagrecht von einer linken zu einer rechten Stütze, und zwar mit der linken Sicke 30 als Oberkante und mit der rechten Sicke 50 als Unterkante. Ein weiteres, identisch aufgebautes Trapezblech 10 wird dann mit seiner unteren Sicke auf bzw. in der oberen Sicke 30 positioniert, so dass es auf der der Befestigungsebene E abgewandten Seite der Sicke 30 montiert wird. Der Wasserfalz 32 sorgt dafür, dass Feuchtigkeit, beispielsweise durch Schlagregen auf die Sicke 30, nicht hinter die Befestigungsebene E und damit in das Gebäudeinnere eindringen kann.

Im Montagezustand steht also der Steg 20 aus der Befestigungsebene E hervor und bildet damit im Wesentlichen die Ansichtsfläche des montierten Trapezblechs 10. Da die Sicken 30, 50 aus dieser Ansichtsfläche zurückspringen, erscheinen sie in einer montierten Hallenwand lediglich als waagrecht verlaufende Schattenfugen. Der Steg 20 als flächenmäßig größtes Teilprofil des Trapezblechs 10 trägt eine Klebstoffschicht 60, die ein Photovoltaikelement 40 auf dem Trapezblech 10 befestigt. Geeignete Klebstoffe für die Klebstoffschicht 60, zum Beispiel selbstklebende polymermodifizierte Bitumenkleber (Fa. Phoenix), sind im Handel erhältlich. Für sie liegen mindestens 20 Jahre Erfahrung für seine Dauerhaftigkeit und Wetterbeständigkeit auch an senkrechten Flächen vor. Sie können auch auf der Rückseite des Photovoltaikelements 40 aufgebracht und mit einer Schutzfolie abgedeckt werden. Auf dem Steg 20 ist ein Haftvermittler bzw. Haftgrund aufgebracht, auf dem das Photovoltaikelement 40 in einer Trockenverklebung und daher vorzugsweise maschinengeführt lagegenau aufgebracht wird.

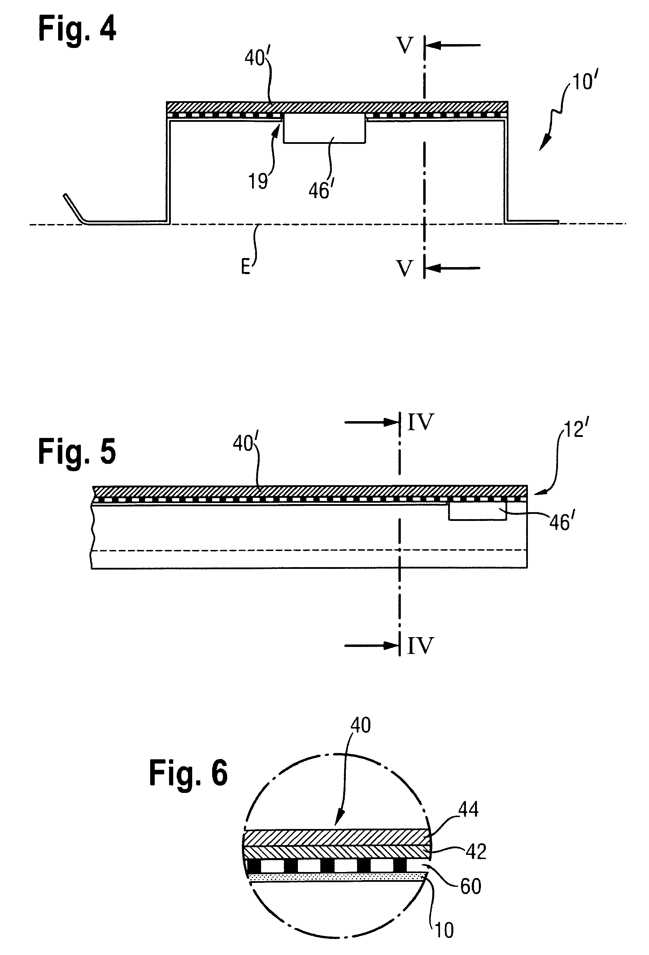

Das Photovoltaikelement 40 besteht gemäß der Detaildarstellung der Figur 6 aus einer streifenförmigen, flächigen und flexiblen Trägerbahn 42 aus einem kunststoffkaschierten Gittergewebe. Darauf ist ein Dünnschicht-Modul als photovoltaische Wirkungsschicht 44 laminiert, die der Stromerzeugung dient und ebenfalls flexibel ist. Sie verträgt einen Biegeradius von bis zu 50 mm. Die Klebstoffschicht 60 bedeckt sowohl eine Unterseite der Trägerbahn 42 als auch eine Oberseite des Trapezblechs 10 vollflächig in einer Dicke von wenigen Millimetern und befestigt so das Photovoltaikelement 40 dauerhaft und unlösbar am Trapezblech 10.

Figur 2 zeigt in einer Seitenansicht eine erste Ausführungsform des erfindungsgemäßen Trapezblechs 10 mit einer einseitigen Abschrägung 22 an einer Schmalseite 12. Sie kommt dadurch zustande, dass der Steg 20 an einem linearen Knick 24 in Richtung auf die Befestigungsebene E hin und mit einem Winkel β von ca. 30° abknickt. Sowohl die linke Sicke 30 als auch die rechte Sicke 50 reichen nur bis auf die Höhe des Knicks 24 (siehe auch Figur 3), liegen also in der Abschrägung 22 nicht mehr vor. Das Photovoltaikelement 40 verläuft aufgrund seiner Flexibilität unverändert über den Knick 24 hinweg und in die Abschrägung hinein. Im Bereich der Abschrägung 22 befindet sich auf dem Photovoltaikelement 40 ein Anschlussabschnitt 46, der Anschlusskabel und Stecker umfasst und den elektrischen Kontakt des Photovoltaikelements 40 mit einer übrigen Gebäudeinstallation ermöglicht.

Die Abschrägung 22 des Trapezblechs 10 dient dazu, dass es in Längsrichtung mit einem gleichartigen Trapezblech verbunden werden kann. Dazu wird das Trapezblech 10 mit seiner Abschrägung 22 unter das benachbarte Trapezblech geschoben, so dass dieses die Abschrägung 22 bis zum Knick 24 überdeckt. Dessen linke und rechte Sicke schließen dann mit einem stumpfen Stoß unmittelbar an die linke Sicke 30 und die rechte Sicke 50 des dargestellten Trapezblechs 10 an. Die Abschrägung 22 liegt dadurch unter dem Steg eines benachbarten Trapezblechs, somit zwischen dem Steg und der Befestigungsebene E und damit außerhalb bzw. hinter der Ansichtsfläche der Hallenwand. Der Anschlussabschnitt 46 ist damit nicht nur optisch verdeckt, sondern auch gegenüber Witterungseinflüssen zuverlässig geschützt. Die Abschrägung 22 ersetzt damit auf einfache Weise einen sonst erforderlichen Kabelkanal zum Schutz des oder mehrerer Anschlussabschnitte 46. Zwei in Längsrichtung nebeneinander montierte Trapezbleche 10 ergeben durch die Überdeckung der Abschrägung 22 einen sehr homogenen und optisch anspruchsvollen Eindruck, der nicht durch Installationseinrichtungen unterbrochen ist.

Figur 4 zeigt eine Schnittansicht einer zweiten Ausführungsform eines erfinderischen Trapezblechs 10'. Der wesentliche Unterschied gegenüber dem Trapezblech 10 der Figuren 1 bis 3 besteht darin, dass das Trapezblech 10' gemäß den Figuren 4 und 5 keine Abschrägung aufweist. Sie ist entbehrlich, weil das Photovoltaikelement 40' seinen Anschlussabschnitt 46' nicht auf der gleichen Seite der Trägerbahn 42' wie die photovoltaische Wirkungsschicht 44' trägt, sondern auf der gegenüberliegenden und klebstoffschichtberührten Seite der Trägerbahn 42'. Um das Photovoltaikelement 40' dennoch ebenflächig auf dem Steg 20' montieren zu können, weist dieser einen Durchbruch 19 auf, durch den hindurch der Anschlussabschnitt 46' in Richtung Befestigungsebene E' ragen kann. Der Durchbruch 19 ist daher mindestens in den gleichen Dimensionen vorzusehen, wie die Außenabmessungen des Anschlussabschnitts 46'. Günstigerweise wird er geringfügig größer ausgeführt, um bei der Befestigung des Photovoltaikelements 40' keinen konstruktiven Zwangspunkt zu schaffen. Die Herstellung des Durchbruchs 19 im Trapezblech 10' erleichtert sich, wenn er an einer Schmalseite 12' des Trapezblechs 10' angebracht wird und dort als U-förmiger Ausschnitt in den Steg 20' eingeschnitten wird.

Da es sich bei den vorhergehenden, detailliert beschriebenen Trapezblechen um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Sicken oder des Stegs in anderer Form und Abmessung als in der hier beschriebenen erfolgen. Ebenso kann das Photovoltaikelement in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste:

- 10, 10': Trapezblech
- 12, 12': Schmalseite
- 14, 16, 18: Falz
- 19: Durchbruch
- 20, 20': Steg
- 22: Abschrägung
- 24: Knick
- 30: linke Sicke
- 32: Wasserfalz
- 40, 40': Photovoltaikelement
- 42, 42': Trägerbahn
- 44: photovoltaische Wirkungsschicht
- 46: Anschlussabschnitt
- 50: rechte Sicke
- 60: Klebstoffschicht

- α: Neigungswinkel des Wasserfalzes 32
- β: Neigungswinkel der Abschrägung 22
- E: Befestigungsebene

## Patentansprüche

1. Solarpaneel eines Hallendach- oder -fassadensystems mit einem Profilblech (10) mit einem tragfähigkeitssteigernden Querschnitt, mit einer Befestigungsebene (E), in der das Profilblech (10) befestigbar ist, und mit einem am Profilblech (10) befestigten flächigen streifenförmigen flexiblen Photovoltaikelement (40), das auf dem Profilblech (10) auf seiner der Befestigungsebene abgewandten Seite verklebt ist, **dadurch gekennzeichnet, dass** es auf einem unebenen Teilprofil (20) des Profilblechs (40) angeordnet ist.

2. Solarpaneel nach Anspruch 1, **gekennzeichnet durch** ein Trapezblech (10) als Profilblech, mit Teilprofilen (20; 30; 50), die eine im Querschnitt stark unterschiedliche Breite des Trapezblechs (10) einnehmen, mit wenigstens einem in Längsrichtung des Trapezblechs (10) verlaufenden Steg (20) als einem Teilprofil und wenigstens einer in Längsrichtung des Trapezblechs (10) und parallel zum Steg (20) verlaufenden Sicke (30) als einem anderen Teilprofil, mit einem Photovoltaikelement (40), das auf dem breiteren Teilprofil befestigt ist.

3. Solarpaneel nach Anspruch 2"**gekennzeichnet durch** einen mittigen Steg (20) und zwei seitlich an seinen Langseiten verlaufenden Sicken (30; 50) in einem Breitenverhältnis der Sicken (30; 50) zum Steg (20) von etwa 1:5 bis 1:25, wobei das Photovoltaikelement (40) auf dem Steg (20) vollflächig angebracht ist.

4. Solarpaneel nach Anspruch 2 oder 3, **gekennzeichnet durch** einer streifenförmige flächige flexible Trägerbahn (42), eine streifenförmige flächige flexible photovoltaische Wirkungsschicht (44) des Photovoltaikelements (40) und einen elektrischen Anschlussabschnitt (46) an der Wirkungsschicht (44), mit einer verdeckten Anordnung des Anschlussabschnitts (46).

5. Solarpaneel nach einem der Ansprüche 2 bis 4, **dadurch gekennzeichnet, dass** es an einer Schmalseite (12) mit einem weiteren Trapezblech in Längsrichtung überlappend montierbar ist.

6. Solarpaneel nach obigem Anspruch mit einer Anordnung der Wirkungsschicht (44) und des Anschlussabschnitts (46) auf derselben Seite der Trägerbahn (42), **gekennzeichnet durch** eine einseitige Abschrägung (22) des Stegs (20) in Längsrichtung an einer Schmalseite (12) des Trapezblechs (10) von mindestens der Länge des Anschlussabschnitts (46) des Photovoltaikelements (40).

7. Solarpaneel nach obigem Anspruch mit einer Anordnung der Wirkungsschicht (44) und des Anschlussabschnitts (46) auf gegenüberliegenden Seiten der Trägerbahn (42), **gekennzeichnet durch** einen Durchbruch (19) des Stegs (20') mit mindestens den Abmessungen des Anschlussabschnitts (46) des Photovoltaikelements (40').

8. Solarpaneel nach einem der obigen Ansprüche, **dadurch gekennzeichnet, dass** der Steg eine mit einem Radius um eine in Längsrichtung des Profilblechs verlaufende Achse gewölbte Oberfläche aufweist.

9. Solarpaneel nach einem der Ansprüche 1 oder 8, **gekennzeichnet durch** Wellblech als Profilblech.
